# EUROPÄISCHE PATENTSCHRIFT

(11) **EP 3 064 454 B1**
(45) Veröffentlichungstag und Bekanntmachung des Hinweises auf die Patenterteilung: **22.12.2021**
(21) Anmeldenummer: 16155849.9
(22) Anmeldetag: 16.02.2016
(51) Int. Cl.: B65G 17/06, B65G 17/42

(54) **FÖRDERKETTE ZUM TRANSPORT VON ARTIKELN UND TRANSPORTSYSTEM MIT FÖRDERKETTE**
CONVEYOR CHAIN FOR TRANSPORTING ITEMS AND TRANSPORT SYSTEM WITH CONVEYOR CHAIN
CHAINE DE TRANSPORT D'ARTICLES ET SYSTEME DE TRANSPORT DOTE DE LADITE CHAINE DE TRANSPORT

(30) Priorität: 05.03.2015 DE 102015103241
(43) Veröffentlichungstag der Anmeldung: 07.09.2016
(73) Patentinhaber: Krones Aktiengesellschaft, 93073 Neutraubling (DE)
(72) Erfinder: SPINDLER, Herbert, 93073 Neutraubling (DE); WERNER, Jürgen, 93073 Neutraubling (DE); KOCH, Peter, 93073 Neutraubling (DE); WITTMANN, Stephan, 93073 Neutraubling (DE)
(74) Vertreter: Benninger, Johannes

(56) Entgegenhaltungen:
- EP-A1- 0 011 512
- WO-A1-2006/075912
- BE-A- 532 944
- FR-A- 1 273 245
- JP-B2- 3 360 278
- US-A- 2 954 113
- US-A- 4 765 454
- US-A1- 2011 253 509
- None

## Beschreibung

Die vorliegende Erfindung betrifft eine Förderkette zum Transport von Artikeln sowie ein Transportsystem mit einer Förderkette.

Um Artikel, wie Getränkebehältnisse oder dergleichen, fortbewegen zu können, sind aus dem Stand der Technik Fördergurte bekannt, die sich aus einer Vielzahl einzelner Glieder zusammensetzen können und beispielsweise aus Kunststoff bestehen. Die einzelnen Glieder sind hierbei gelenkig miteinander verbunden; der Fördergurt ist sinnvollerweise geschlossen ausgebildet und kann über Rollen oder dergleichen umgelenkt werden. Auf seiner oberen Seite stellen aus dem Stand der Technik bekannte Fördergurte eine Ebene bereit, auf welcher Artikel für ihren Transport aufstehen können. Beispielsweise können Einrichtungen mit Fördergurten Artikel von einer ersten Bearbeitungsstation in Richtung einer zweiten Bearbeitungsstation bewegen.

Einen derartigen mehrgliedrigen Fördergurt offenbart die DE 20 2010 009 325 U1.

Der Fördergurt des DE-Gebrauchsmusters besitzt aus Kunststoff gebildete Materialstreifen und Stützelemente, über welche eine Auflage- und Transportfläche für Artikel gebildet wird. Mehrerer Materialstreifen und mehrere Stützelemente sitzen jeweils auf einer Achse auf. Die Materialstreifen und Stützelemente werden von den Achsen getragen. Die Praxis hat gezeigt, dass es beim Transport von Artikeln mit großer Masse durch Förderketten gemäß dem DE-Gebrauchsmuster zu Beschädigungen bzw. Verformungen der Förderkette kommen kann. Insbesondere können Beschädigungen auftreten, wenn eine Breite der Förderkette gering dimensioniert ist. Eine größere Dimensionierung der Förderkette ist jedoch häufig nicht gewünscht, da hiermit ein größerer Platzbedarf einhergeht und derartige Förderketten höhere Anschaffungskosten besitzen. Wünschenswert wären daher Förderketten bzw. entsprechende Transportsysteme, mittels welcher Artikel mit hoher Masse auch bei kleiner Dimensionierung bzw. kleiner Breite der Förderkette transportiert werden können, ohne dass hiermit eine Beschädigung der Förderkette einhergeht.

Die FR 1 273 245 A offenbart eine Förderkette nach dem Oberbegriff des Anspruchs 1, welche über mit parallelen Schenkeln ausgestattete Platten verfügt, auf welchen Artikel transportiert werden können. Die parallelen Schenkel werden von den Achsbolzen zweier benachbarter Kettenglieder durchsetzt und umspannen diese jeweils zur Hälfte.

In der EP 0 011 512 A1 wird eine aus zwei parallelen Einzelketten mit zwischenliegenden Auflagerollen bestehende Förderkette gezeigt, welche über als Distanzhalter ausbildete Seitenteile verfügt. Die Seitenteile sind in ihrem unteren Teil Bestandteil der jeweiligen Einzelketten und beherbergen in ihrem oberen Teil die Enden der Auflagerollen.

Die Förderkette der WO 2006/075912 A1 besteht aus einer Vielzahl von flachen Transportelementen, welche hochkant in Reihen parallel zueinander beabstandet angeordnet und wobei aufeinanderfolgende Reihen jeweils miteinander verschränkt sind, wodurch eine Aufstandsfläche für Artikel gebildet wird. In die Abstände zwischen die parallel angeordneten Transportelemente kann die Verzahnung eines entsprechend ausgebildeten Kettenblattes eingreifen.

Weiter offenbart die US 2,954,113 A eine Förderkette mit mehreren drehbeweglich miteinander in Verbindung stehenden einzelnen Gliedern sowie mehreren Transportelementen, welche mechanisch an die einzelnen Glieder gekoppelt sind. Die Transportelemente besitzen jeweils zwei parallel zueinander orientierte Schenkel, welche die einzelnen Glieder der Förderkette seitlich umgreifen.

Eine Aufgabe der Erfindung kann darin bestehen, eine Förderkette zum Transport von Artikeln zur Verfügung zu stellen, mittels welcher Artikel mit großer Masse transportiert werden können, ohne dass die Förderkette hierdurch beschädigt wird. Weiter kann eine Aufgabe der Erfindung darin gesehen werden, ein entsprechendes Transportsystem mit Förderkette zur Verfügung zu stellen, mittels welches Transportsystems Artikel mit hoher Masse transportiert werden können, ohne dass hierbei die Förderkette beschädigt wird. Zudem sollen die Förderkette und das Transportsystem einen einfachen Aufbau besitzen.

Die obigen Aufgaben werden durch eine Förderkette und ein Transportsystem gelöst, welche die Merkmale in den Schutzansprüchen 1 und 9 umfassen. Weitere vorteilhafte Ausgestaltungen werden durch die Unteransprüche beschrieben.

Die Erfindung betrifft eine Förderkette nach Anspruch 1 zum Transport von Artikeln wie Getränkebehälter oder dergleichen. Artikel, welche mittels der Förderkette transportiert werden können, sind jedoch nicht auf Getränkebehältnisse beschränkt. So ist beispielsweise vorstellbar, dass mittels der Förderkette Stückgut, Verpackungseinheiten, bereits zu Gebinden zusammengefasste Getränkebehältnisse und/oder weitere Artikel transportiert werden.

Die Förderkette umfasst eine Vielzahl einzelner Kettenglieder, welche Kettenglieder jeweils zwei parallel zueinander orientierte Schenkel und mindestens einen Bolzen umfassen. Die Längsachsen der Schenkel können jeweils parallel zur Laufrichtung der Kette orientiert sein. Hinsichtlich ihrer Geometrie können die beiden Schenkel eine S-Form und eine Z-Form besitzen. Weiter kann der mindestens eine Bolzen orthogonal zu den jeweiligen parallel zueinander orientierten Schenkeln ausgerichtet sein und eine zylindrische Geometrie besitzen. Sinnvollerweise können jedem der Kettenglieder zwei weitere Kettenglieder direkt benachbart sein, wobei jedes der Kettenglieder mit seinen zwei direkt benachbarten Kettengliedern gelenkig in Verbindung steht. Die Förderkette kann geschlossen sein bzw. als geschlossene Ringkonstruktion ausgebildet sein, so dass die Förderkette als Bestandteil eines nachfolgend noch beschriebenen Transportsystems umlaufend bewegt wird und hierbei Artikel transportiert, die auf der Förderkette aufstehen.

Erfindungsgemäß ist zudem vorgesehen, dass der mindestens eine Bolzen die beiden parallel zueinander orientierten Schenkel des jeweiligen Kettengliedes mechanisch aneinander koppelt. Beispielsweise kann der mindestens eine Bolzen die beiden parallel zueinander orientierten Schenkel drehfest miteinander verbinden bzw. drehfest mit den beiden parallel zueinander orientierten Schenkeln jeweils in Verbindung stehen, so dass über den mindestens einen Bolzen eine Relativbewegung der beiden parallel zueinander orientierten Schenkel unterbunden wird. Für weitere bevorzugte Ausführungsformen, die sich in der Praxis bewährt haben, kann es jedoch sein, dass der Bolzen in Öffnungen der beiden Schenkel eintaucht und axial zu den beiden Schenkeln bewegt werden kann.

Die Bolzen mehrerer Kettenglieder können parallel zueinander orientiert sein. Vorzugsweise besitzen sämtlich Bolzen der Vielzahl einzelner Kettenglieder eine parallele oder eine zumindest näherungsweise parallele Ausrichtung zueinander.

Weiter ist vorgesehen, dass Bolzen direkt benachbarter Kettenglieder gelenkig miteinander in Verbindung stehen, so dass die einzelnen Kettenglieder relativ zueinander verschwenkt werden können. Hierbei kann bevorzugt vorgesehen sein, dass die Kettenglieder um eine jeweilige Achse relativ zueinander verschwenkt werden können, die orthogonal zu den Schenkeln orientiert ist. Die Schwenkachsen können demnach durch die Bolzen ausgebildet sein. Weiter kann die mechanische Koppelung der einzelnen Kettenglieder über ihre Bolzen derart ausgebildet sein, dass eine Verwindung der einzelnen Kettenglieder zueinander zumindest weitestgehend unterbunden wird.

Zudem umfasst die Förderkette eine Vielzahl einzelner Transportelemente, die jeweils eine plane bzw. ebene Aufstandsfläche für Artikel bereitstellen und jeweils mindestens zwei Buchsen besitzen, in welchen Bolzen direkt benachbarter Kettenglieder drehbeweglich aufgenommen sind. Die einzelnen Transportelemente können jeweils ein Dach mit zwei gegenüberliegenden Breitseitenflächen besitzen, wobei eine den Kettengliedern bzw. den Bolzen abgewandte Breitseitenfläche des Daches als Aufstandsfläche für die Artikel ausgebildet ist. Die Aufstandsfläche kann eine rechteckige Geometrie besitzen.

Weiter kann es sein, dass die zwei Schenkel eines oder mehrerer der Kettenglieder jeweils einen Durchbruch ausbilden, in welchen Durchbrüchen der Bolzen eines jeweils direkt benachbarten Kettengliedes drehbeweglich aufgenommen ist. Hierdurch können die Kettenglieder gelenkig miteinander verbunden werden. Die Bolzen können hierbei mit geringem Spiel in den Durchbrüchen aufgenommen sein. Die Durchbrüche der zwei Schenkel des jeweiligen Kettengliedes können miteinander fluchten. Somit können sämtliche Kettenglieder einen Bolzen eines jeweils direkt benachbarten Kettengliedes gelenkig aufnehmen.

Darüber hinaus bildet wenigstens eine der mindestens zwei Buchsen von Transportelementen eine Außenmantelfläche aus, die jeweils eine in Richtung weg der Aufstandsfläche gerichtete konvexe Krümmung besitzt. Hierdurch wird ein kämmender Eingriff zwischen einem nachfolgend noch näher beschriebenen Ritzel bzw. einem nachfolgend noch näher beschriebenen Kettenblatt und der Förderkette optimiert ausgestaltet, so dass die Förderkette mit geringem Verschleiß und ohne Probleme über das Ritzel bewegt bzw. über das Kettenblatt umgelenkt werden kann. Für weitere Ausführungsformen ist zudem vorstellbar, dass ein oder mehrere Bolzen der Kettenglieder mit einer Rolle in Verbindung stehen bzw. dass eine Rolle auf einem oder mehreren Bolzen der einzelnen Kettenglieder drehbar aufsitzt.

Insbesondere haben sich Ausführungsformen bewährt, bei welchen sämtliche der mindestens zwei Buchsen eines oder mehrerer Transportelemente eine Außenmantelfläche ausbilden, die jeweils eine in Richtung weg der Aufstandsfläche gerichtete konvexe Krümmung besitzt. Die Radien der konvexen Krümmungen für sämtliche der mindestens zwei Buchsen des jeweiligen Transportelementes können zumindest näherungsweise identisch ausgebildet sein. Auch hierdurch kann ein kämmender Eingriff weiterhin verbessert werden.

Zudem können die Aufstandsflächen der Transportelemente und/oder mehrerer nachfolgend noch beschriebener Stützelemente derart aneinander angrenzen, dass diese gemeinsam eine zumindest näherungsweise unterbrechungsfreie Transportebene für Artikel bereitstellen. Die Aufstandsflächen jeweils direkt benachbarter Transportelemente können hierbei keinen oder lediglich einen geringen Abstand zueinander besitzen, so dass zwischen den Aufstandsflächen jeweils direkt benachbarter Transportelemente kein oder lediglich ein geringer Spalt ausgebildet ist. Derartige Ausführungsformen mit zumindest näherungsweise unterbrechungsfreier Transportebene haben sich bewährt, um ein Kippen von Artikeln bei Transport zu verhindern und ein stabiles Aufstehen von Artikeln auf der Förderkette gewährleisten zu können.

Auch ist vorstellbar, dass ein oder mehrere Kettenglieder jeweils wenigstens zwei Bolzen umfassen, die parallel zueinander orientiert sind und die Schenkel des jeweiligen Kettengliedes mechanisch aneinander koppeln, wobei mit den wenigstens zwei Bolzen jeweils ein Stützelement in Verbindung steht, das über korrespondierende Öffnungen die jeweiligen wenigstens zwei Bolzen aufnimmt und eine plane Aufstandsfläche für Artikel bereitstellt. Die plane Aufstandsfläche eines jeweiligen Stützelementes kann an zwei plane Aufstandsflächen von Transportelementen anschließen. Zwischen der planen Aufstandsfläche des Stützelementes und der planen Aufstandsfläche dieser Transportelemente kann kein oder lediglich ein geringer Abstand ausgebildet sein. Insbesondere können plane Aufstandsflächen mehrerer Stützelemente und plane Aufstandsflächen mehrerer Transportelemente gemeinsam eine zumindest näherungsweise geschlossene Ebene zum Transport von Artikeln ausbilden. Jeder der Bolzen kann zudem durch eine Buchse eines Transportelementes aufgenommen sein. So ist denkbar, dass ein erster Bolzen eines Kettengliedes durch eine Buchse eines ersten Transportelementes aufgenommen ist und ein zweiter Bolzen eines Kettengliedes durch eine Buchse eines zweiten Transportelementes. Sowohl das erste Transportelement als auch das zweite Transportelement können hierbei durch eine jeweilige zweite Buchse den Bolzen eines benachbarten Kettengliedes aufnehmen.

Erfindungsgemäß umfasst die eine Buchse des ersten Transportelementes zwei parallele Arme und die eine Buchse des weiteren Transportelementes ist zwischen den beiden Armen positioniert, so dass der Bolzen die Buchse des ersten Transportelementes und die Buchse des weiteren Transportelementes gemeinsam durchsetzt.

Um die Stabilität der Förderkette weiter zu erhöhen und das Risiko einer Beschädigung der Förderkette bei Transport von Artikeln mit großer Masse weiter reduzieren zu können, kann es sein, dass die zwei parallel zueinander orientierten Schenkel und/oder Bolzen der einzelnen Kettenglieder bzw. sämtlicher Kettenglieder jeweils durch Metall und insbesondere durch Stahl gebildet sind.

Um die Förderkette einfach und kostengünstig herstellen zu können, haben sich zudem Ausführungsformen bewährt, bei welchen die Transportelemente und/oder die Stützelemente jeweils durch Kunststoff gebildet sind bzw. im Spritzgussverfahren hergestellt werden.

Weiter kann es sein, dass die einzelnen Transportelemente und/oder ein oder mehrere Stützelemente im Bereich ihrer jeweiligen Aufstandsfläche eine Nut besitzen, wobei die Nuten sämtlicher Transportelemente und/oder die Nuten sämtlicher Stützelemente gemeinsam einen im Wesentlichen unterbrechungsfreien Kanal ausbilden.

Die Erfindung betrifft darüber hinaus ein Transportsystem für Artikel nach Anspruch 9 mit einer Förderkette, wie sie vorhergehend bereits beschrieben wurde. Das Transportsystem umfasst ein angetriebenes Ritzel mit einer Außenverzahnung, welches kämmend mit der Förderkette in Eingriff steht, um die Förderkette zu bewegen. Weiter umfasst das Transportsystem ein Kettenblatt mit Außenverzahnung, welches mechanisch bzw. kämmend mit der Förderkette in Eingriff steht und die Förderkette umlaufend lenkt. Das Ritzel kann von einem Aktor angetrieben werden bzw. über einen Aktor drehend bewegt werden.

In bevorzugten Ausführungsformen kann das Transportsystem wenigstens eine Positionierungseinrichtung mit einem oder mehreren Fingern umfassen, welche ein oder mehreren Finger in den im Wesentlichen unterbrechungsfreien Kanal eintauchen. Die ein oder mehreren Finger können als unbeweglicher Bestandteil des Transportsystems ausgebildet sein und durch ihr Eintauchen in den Kanal einen ruhigen Lauf der Förderkette sicherstellen.

Die ein oder mehreren Finger können mit Spiel in den Förderkanal eintauchen. Für bevorzugte Ausführungsformen ist jedoch vorgesehen, dass die ein oder mehreren Finger im Wesentlichen spielfrei in den Kanal eintauchen, um die Förderkette genau führen zu können.

Wird die Förderkette ungewollt seitlich mit Kraft beaufschlagt, so kann die Förderkette von den ein oder mehreren Fingern gehalten werden, wobei die ein oder mehreren Finger ein Ausweichen der Förderkette schräg zur Förderrichtung unterbinden oder zumindest näherungsweise unterbinden. Mittel der Positionierungseinrichtung bzw. mittels eines Eintauchens der ein oder mehreren Finger in den im Wesentlichen unterbrechungsfreien Kanal kann die Förderkette ruhig geführt werden, so dass das Risiko eines Kippens von Artikeln während ihres Transportes gering gehalten werden kann. Insbesondere kann es sein, dass die ein oder mehreren Finger vollständig oder im Wesentlichen vollständig im Kanal abtauchen, so dass ein Transport von Artikeln nicht behindert wird. Die Längsachse der ein oder mehreren Finger kann in Transportrichtung der Förderkette verlaufen bzw. parallel zu den Schenkeln der Kettenglieder und ggf. lotrecht zur Längsachse von Bolzen der Kettenglieder orientiert sein.

Es ist zudem vorstellbar, dass die wenigstens eine Positionierungseinrichtung derart im Bereich des angetriebenen Ritzels und/oder im Bereich des Kettenblattes angeordnet ist, dass die ein oder mehreren Finger im Bereich einer Umlenkung der Förderkette mit dem im Wesentlichen unterbrechungsfreien Kanal in Eingriff stehen. Die ein oder mehreren Finger können daher spätestens nach vollständiger Umlenkung einer Partie der Förderkette in einen im Bereich dieser Partie ausgebildeten Kanal vollständig eingetaucht sein. In besonders bevorzugten Ausführungsformen kann sowohl im Bereich des Ritzels als auch im Bereich des Kettenblattes eine eigene Positionierungseinrichtung ausgebildet sein, die via ihre Finger in den Kanal der Förderkette eintaucht.

Weiter ist denkbar, dass die wenigstens eine Positionierungseinrichtung mindestens zwei Führungsarme besitzt, deren Längsachsen parallel zur Laufrichtung der Förderketten ausgerichtet sind, welche Führungsarme die Förderkette bei ihrer Bewegung mit geringem Spiel passiert. Derartige Ausführungsformen tragen zusätzlich dazu bei, einen ruhigen Lauf der Förderkette gewährleisten zu können.

Bei weiteren denkbaren Ausführungsformen des Transportsystems können zudem mehrere Förderketten vorhanden sein, die eine parallele Transportrichtung besitzen und Artikel, wie Getränkebehältnisse oder dergleichen, gemeinsam bewegen. Mehrere Förderketten können direkt nebeneinander platziert sein, so dass ein Artikel bzw. ein Getränkebehältnis während seines Transportes auf den mehreren Förderketten zeitgleich aufstehen kann.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Perspektivansicht einer Ausführungsform einer erfindungsgemäßen Förderkette;
Figur 2 zeigt eine schematische Perspektivansicht von oben auf die Ausführungsform einer erfindungsgemäßen Förderkette gemäß Figur 1;
Figur 3 zeigt eine schematische Perspektivansicht von unten auf die Ausführungsform einer erfindungsgemäßen Förderkette gemäß Figuren 1 und 2;
Figur 4 zeigt eine schematische Seitenansicht auf die Ausführungsform einer Förderkette gemäß Figuren 1 bis 3;
Figur 5 zeigt eine schematische Ansicht von vorne auf die Ausführungsform einer Förderkette aus den Figuren 1 bis 4;
Figur 6 zeigt einen schematischen Querschnitt durch eine Förderkette gemäß der Ausführungsform aus den Figuren 1 bis 5;
Figur 7 zeigt eine schematische Perspektivansicht einer weiteren Ausführungsform einer erfindungsgemäßen Förderkette;
Figur 8 zeigt eine schematische Draufsicht auf die Förderkette der in Figur 7 gezeigten Ausführungsform;
Figur 9 zeigt eine schematische Ansicht von schräg oben auf die Ausführungsform einer Förderkette gemäß Figuren 7 und 8;
Figur 10 zeigt eine schematische Ansicht einer Ausführungsform eines erfindungsgemäßen Transportsystems.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

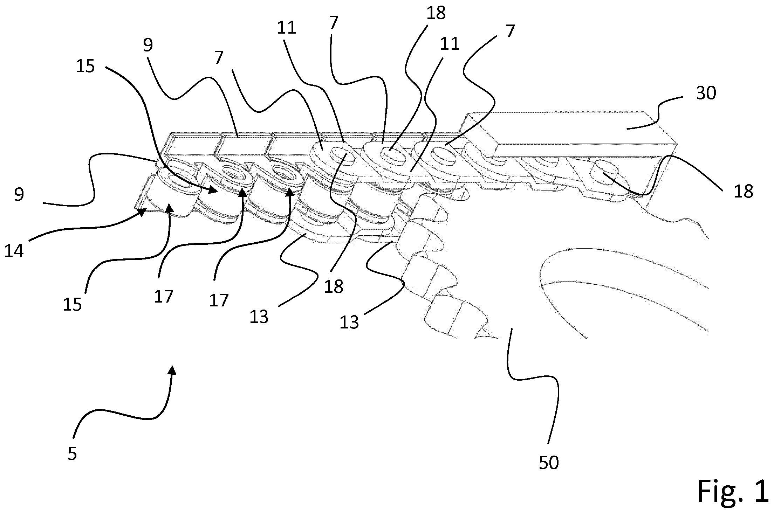

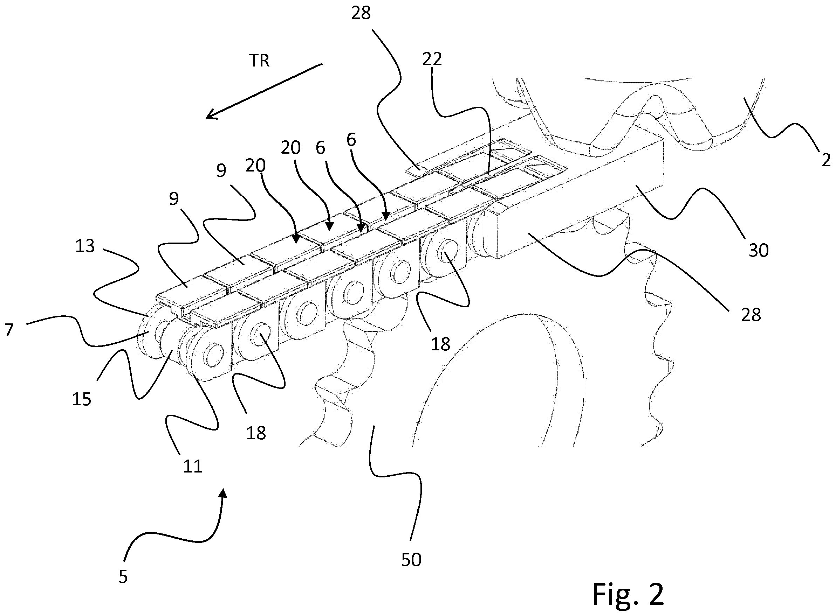

Figur 1 zeigt eine schematische Perspektivansicht einer Ausführungsform einer erfindungsgemäßen Förderkette 5. Mittels der Förderkette 5 können Artikel, wie Getränkebehältnisse 2 (vgl. Figur 2), transportiert werden. Vorab sei erwähnt, dass in den Figuren vorliegender Patentanmeldung lediglich eine Förderkette 5 dargestellt ist, mittels welcher Artikel bzw. Getränkebehältnisse 2 transportiert werden. In der Praxis können jedoch Ausführungsformen vorgesehen sein, bei welchen mehrere Förderketten 5 benachbart zueinander angeordnet sind, parallele Transportrichtungen TR (vgl. Figur 2) besitzen und gemeinsam Artikel befördern. Die Fördergeschwindigkeiten der mehreren Förderketten 5 können hierbei identisch ausgebildet sein.

Die Förderkette 5 umfasst eine Vielzahl einzelner Kettenglieder 7, die in einer Reihe hintereinander angeordnet sind, wobei die Kettenglieder 7 mit ihren beiden jeweils benachbarten Kettengliedern 7 gelenkig in Verbindung stehen, so dass sämtliche Kettenglieder 7 relativ zueinander verschwenkt werden können. Jedes der Kettenglieder 7 umfasst zwei parallel zueinander orientierte Schenkel 11 und 13 und einen Bolzen 18, der die beiden parallel zueinander orientierten Schenkel 11 und 13 mechanisch miteinander koppelt. Zur mechanischen Koppelung bilden die beiden Schenkel 11 und 13 jeweils einen Durchbruch aus, in welchen Durchbrüchen der Bolzen 18 eines jeweils direkt benachbarten Kettengliedes 7 schwenkbeweglich aufgenommen ist.

Der Bolzen 18 des jeweiligen Kettengliedes 7 kann in axialer Richtung relativ zu den beiden Schenkeln 11 und 13 bewegt werden. Rechtsseitig ist in Figur 1 ein Bolzen 18 gezeigt, welcher bei Umlenkung durch ein Kettenblatt 50 axial zu den beiden Schenkeln 11 und 13 bewegt wurde. Eine drehfeste Verbindung zwischen dem Bolzen 18 und den beiden Schenkeln 11 und 13 ist im Ausführungsbeispiel aus Figur 1 nicht vorgesehen, kann jedoch in weiteren denkbaren Ausführungsformen ausgebildet sein. Die Bolzen 18 sind demnach sowohl zum Verbinden benachbarter Kettenglieder 7 als auch zur mechanischen Koppelung beider Schenkel 11 und 13 des jeweiligen Kettengliedes 7 vorgesehen.

Die Förderkette 5 umfasst zudem eine Vielzahl einzelner Transportelemente 9, die jeweils ein Dach 14 mit zwei gegenüberliegenden Breitseitenflächen umfassen. Zudem bilden die Transportelemente 9 jeweils eine plane Aufstandsfläche 20 (vgl. Figur 2) für Artikel bzw. Getränkebehältnisse 2 aus. Die plane Aufstandsfläche 20 wird durch eine Breitseitenfläche des Daches 14 ausgebildet, welche den Kettengliedern 7 abgewandt ist. Werden Artikel bzw. Getränkebehältnisse 2 mittels der Förderkette 5 transportiert, so besitzen die Aufstandsflächen 20 eine zumindest näherungsweise horizontale Orientierung.

Jedes der Transportelemente 9 besitzt zwei Buchsen 15 und 17, in welchen Bolzen 18 direkt benachbarter Kettenglieder 7 jeweils drehbeweglich aufgenommen sind. So wird ein Bolzen 18 eines ersten Kettengliedes 7 durch eine erste Buchse 15 eines Transportelementes 9 aufgenommen, während ein Bolzen 18 eines weiteren Kettengliedes 7 durch eine zweite Buchse 17 des selbigen Transportelementes 9 aufgenommen wird.

Da die Transportelemente 9 somit drehbeweglich an die Kettenglieder 7 gekoppelt sind, können die Transportelemente 9 bei einer Umlenkung der Förderkette 5 relativ zu den Kettengliedern 7 verschwenkt werden. Weiter sind benachbarte Kettenglieder 7 über ein Transportelement 9 mechanisch miteinander verbunden, womit eine hohe Stabilität der Förderkette 5 einhergeht.

Die einzelnen Transportelemente 9 können einstückig im Spritzgussverfahren hergestellt werden und sind vorliegend aus Kunststoff gebildet. Die Kettenglieder 7 bzw. die Schenkel 11 und 13 sowie die Bolzen 18 sind durch Stahl gebildet. Mittels der Förderkette 5 können somit Artikel mit großer Masse transportiert werden, ohne dass die Förderkette 5 verformt bzw. beschädigt wird. Durch die Ausbildung der Transportelemente 9 durch Kunststoff kann eine derartige Förderkette 5 einfach, schnell und mit geringen Kosten hergestellt werden.

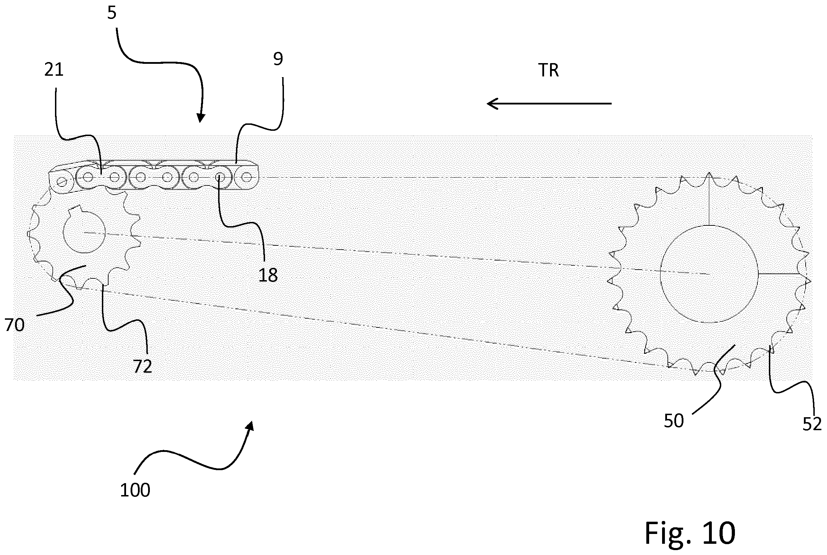

Figur 1 lässt darüber hinaus erkennen, dass die Buchsen 15 und 17 der Transportelemente 9 eine in Richtung weg des Daches 14 bzw. der Aufstandsfläche 20 (vgl. Figur 2) gerichtete konvexe Krümmung besitzen. Eine derartige Krümmung hat sich bewährt, um einen kämmenden Eingriff zwischen Kettenblatt 50 bzw. Ritzel 70 (vgl. Figur 10) und Förderkette 5 gewährleisten zu können.

Zudem zeigt Figur 1, dass eine jeweilige zweite Buchse 17 der Transportelemente 9 durch zwei parallel zueinander orientierte Arme gebildet ist, die jeweils einen Durchbruch besitzen und zwischen welchen Armen eine erste Buchse15 eines weiteren Transportelementes 9 angeordnet ist. Die Bolzen 18 können hierdurch sowohl die erste Buchse 15 eines jeweiligen ersten Transportelementes 9 als auch die zweite Buchse 17 eines jeweiligen weiteren Transportelemente 9 durchgreifen und hierdurch benachbarte Transportelemente 9 drehbeweglich aneinander koppeln.

Figur 2 zeigt eine Perspektivansicht von oben auf die Ausführungsform einer erfindungsgemäßen Förderkette 5 gemäß Figur 1. Für den angesprochenen Fachmann ist klar, dass die Förderkette 5 nicht vollständig dargestellt ist, sondern in Figur 2 und weiteren Figuren lediglich anteilig, um das Funktionsprinzip und den konstruktiven Aufbau zu verdeutlichen.

Dargestellt sind die Aufstandsflächen 20 der einzelnen Transportelemente 9, wobei Figur 2 erkennen lässt, dass zwischen direkt benachbarten Aufstandsflächen 20 lediglich ein geringer oder kein Abstand ausgebildet ist, so dass die Aufstandsflächen 20 gemeinsame eine horizontal orientierte Transportebene für Artikel bzw. Getränkebehältnisse 2 bereitstellen.

Auch ist in Figur 2 eine Transportrichtung TR gezeigt, entlang welcher die Förderkette 5 Getränkebehältnisse 2 bewegt. Bei Bewegung der Förderkette 5 durch das Ritzel 70 (vgl. Figur 10) wandern die Transportelemente 9 und die einzelnen Kettenglieder 7 somit in Transportrichtung TR. Die Transportrichtung TR verläuft hierbei parallel zur Längsachse der Schenkel 11 und 13 und orthogonal zu den Bolzen 18.

Jedes der Transportelemente 9 bzw. jede Aufstandsfläche 20 der Transportelemente 9 besitzt eine Nut 6, wobei die Nuten 6 der Transportelemente 9 fluchtend zueinander ausgerichtet sind und hierbei einen Kanal bereitstellen, in welchen ein Finger 22 einer Positionierungseinrichtung 30 eintaucht. Die Positionierungseinrichtung 30 ist im Bereich des Kettenblattes 50 angeordnet, der Finger 22 greift in die jeweilige Nut 6 bzw. in den Kanal bereits bei und unmittelbar nach vollständigem Auftauchen des jeweiligen Transportelementes 9 ein. Das Kettenblatt 50 der Figur 2 sowie die Positionierungseinrichtung 30 können Bestandteil eines Transportsystems 100 (vgl. Figur 10) sein. Eine ungewollte Deorientierung der Förderkette 5 schräg zur Transportrichtung TR wird durch den Finger 22 verhindert, so dass der Finger 22 die Förderkette 5 führt. Zudem können mittels des Fingers 22 Verunreinigungen aus den Nuten 6 der Transportelemente 9 entfernt werden. Die Geometrie des Fingers 22 ist korrespondierend zu dem durch die Nuten 6 gebildeten Kanal, so dass sich der Finger 22 im Wesentlichen spielfrei im Kanal befindet.

Die Längserstreckung des Fingers 22 ist größer ausgebildet als die Längserstreckung der Nut 6 eines Transportelementes 9, so dass der Finger 22 in mindestens zwei Nuten 6 wenigstens zweier Transportelemente 9 zeitgleich eintauchen kann. Darüber hinaus zeigt Figur 2 nochmals die erste Buchse 15 der Transportelemente 9, welche einen Bolzen 18 aufnimmt.

Die Positionierungseinrichtung 30 umfasst zudem zwei Führungsarme 28, welche Führungsarme 28 die Förderkette 5 bzw. die einzelnen Kettenglieder 7 der Förderkette 5 bei Transport des Getränkebehältnisses 2 passieren. Auch die beiden Führungsarme 28 sind vorgesehen, um die Förderkette 5 in ihrer Bahn zu halten bzw. um eine Deorientierung der Förderkette 5 schräg zur Transportrichtung TR zu verhindern. Die Führungsarme 28 sind jeweils parallel zur Transportrichtung TR orientiert. Der Betrag ihrer jeweiligen Längserstreckung ist größer als der Betrag der Längserstreckung der Nut 6 eines Transportelementes 9 ausgebildet. Somit können die Führungsarme 28 ggf. zeitgleich mit zwei Transportelementen 9 in Kontakt treten, um einen seitlichen Versatz der Förderkette 5 schräg zur Transportrichtung TR zu unterbinden.

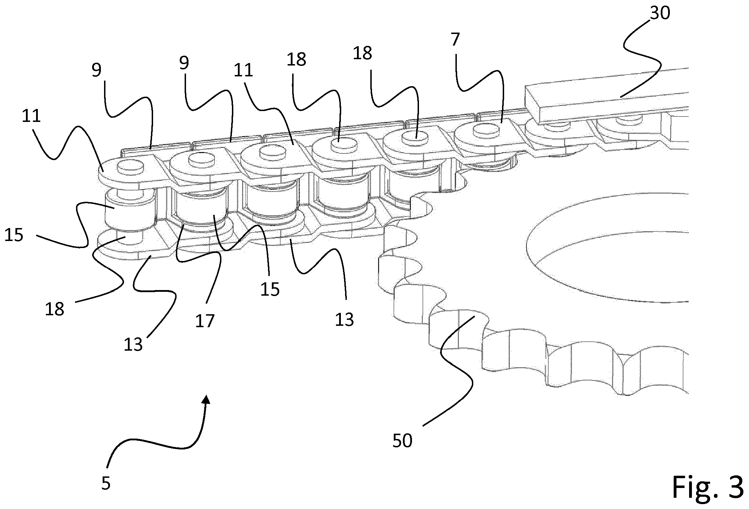

Figur 3 zeigt eine Perspektivansicht von unten auf die Ausführungsform einer erfindungsgemäßen Förderkette 5 gemäß Figuren 1 und 2. Insbesondere zeigt Figur 3 nochmals sehr gut die zweiten Buchsen 17 der einzelnen Transportelemente 9, welche zwei parallele Arme mit Öffnungen besitzt, zwischen welchen die erste Buchse 15 eines benachbarten Transportelementes 9 angeordnet ist. Sämtliche Bolzen 18 der Kettenglieder 7 sind parallel zueinander orientiert. Zudem zeigt Figur 3 nochmals die beiden Schenkel 11 und 13 der Kettenglieder 7. Der erste Schenkel 11 ist z-förmig ausgebildet, während der zweite Schenkel s-förmig ausgebildet ist.

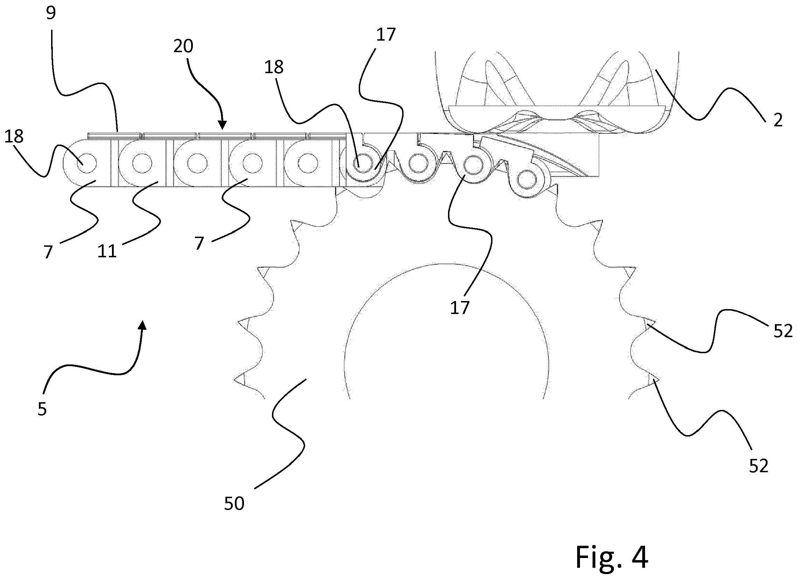

Figur 4 zeigt eine schematische Seitenansicht auf die Ausführungsform einer Förderkette 5 gemäß Figuren 1 bis 3. Die Führungsarme 28 (vgl. Figur 2) der Positionierungseinrichtung 30 (vgl. Fig. 2) sind in Figur 4 nicht mit dargestellt. Figur 4 verdeutlicht den kämmenden Eingriff zwischen Kettenblatt 50 und Förderkette 5. Die jeweilige konvex gewölbte Außenmantelfläche der Buchsen 15 und 17, von welchen in Figur 4 die jeweiligen zweiten Buchsen 17 der Transportelemente 9 zu erkennen sind, ist hierbei dergestalt, dass diese mit der Verzahnung 52 des Kettenblattes 50 korrespondieren. Die Förderkette 5 kann hierdurch über das Kettenblatt 50 umgelenkt werden, ohne dass hiermit ein nennenswerter Verschleiß der Förderkette 5 bzw. der Transportelemente 9 einhergeht.

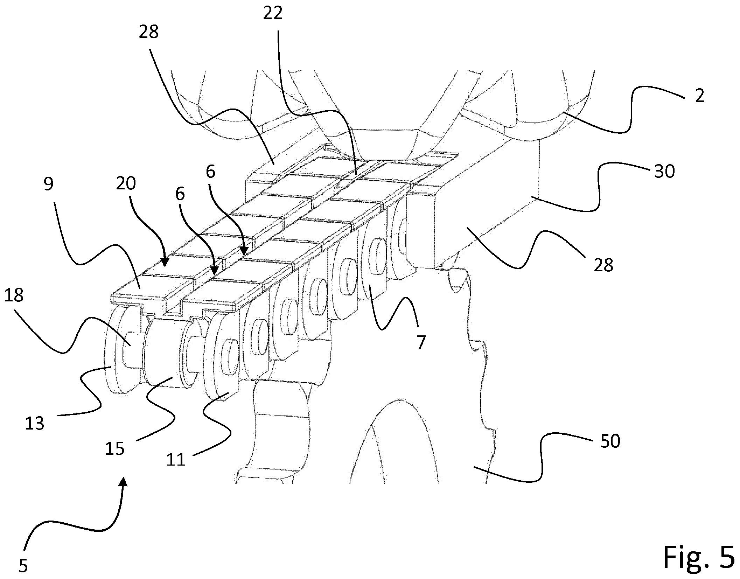

Figur 5 zeigt eine schematische Ansicht von vorne auf die Ausführungsform einer Förderkette 5 aus den Figuren 1 bis 4. Der Finger 22 der Positionierungseinrichtung 30 taucht vollständig in dem durch die Nuten 6 der Transportelemente 9 gebildeten Kanal ab, so dass er vertikal nicht über die Transportelemente 9 übersteht bzw. bündig mit der Aufstandsfläche 20 abschließt. Hierdurch können Artikel bzw. Getränkebehältnisse 2 über die Förderkette 5 transportiert werden ohne mit dem Finger 22 in Kontakt zu geraten oder ggf. über den Finger 22 gleitend hinwegbewegt zu werden. Das Risiko eines Kippens von auf der Förderkette 5 stehend angeordneten Artikeln bzw. Getränkebehältnissen 2 wird hierdurch ausgeschlossen.

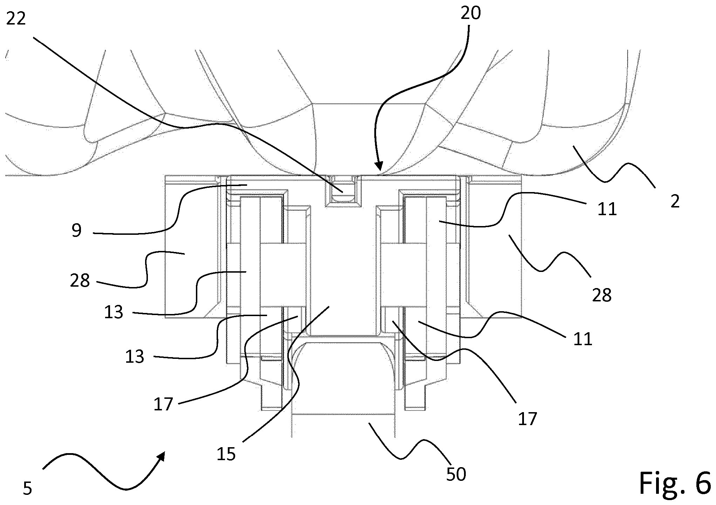

Figur 6 zeigt einen schematischen Querschnitt durch eine Förderkette 5 gemäß der Ausführungsform aus den Figuren 1 bis 5. Hierbei lässt Figur 6 erkennen, dass die Führungsarme 28 lediglich einen geringen Abstand zu den einzelnen Kettengliedern 7 und den Transportelementen 9 besitzen. Die Förderkette 5 kann hierdurch zumindest näherungsweise ohne seitlichen Versatz in ihrer Position gehalten werden. Zudem lässt Figur 6 erkennen, dass das Transportelement 9 bzw. die Aufstandsfläche 20 des Transportelementes 9 seitlich über die beiden Schenkel 11 und 13 übersteht.

Schenkel 11 und 13 eines ersten Kettengliedes 7 stehen mit Schenkeln 11 und 13 eines weiteren Kettengliedes 7 in Oberflächenkontakt. Die erste Buchse 15 befindet sich, wie vorhergehend bereits erwähnt, zwischen den beiden Armen der zweiten Buchse 17. Auch zeigt Figur 6 nochmals den Finger 22 der Positionierungseinrichtung 30 (vgl. Figur 5). Der Finger 22 ist im Wesentlichen spielfrei in der jeweiligen Nut 6 der Transportelemente 9 bzw. in dem durch die Transportelemente 9 gebildetem Kanal aufgenommen.

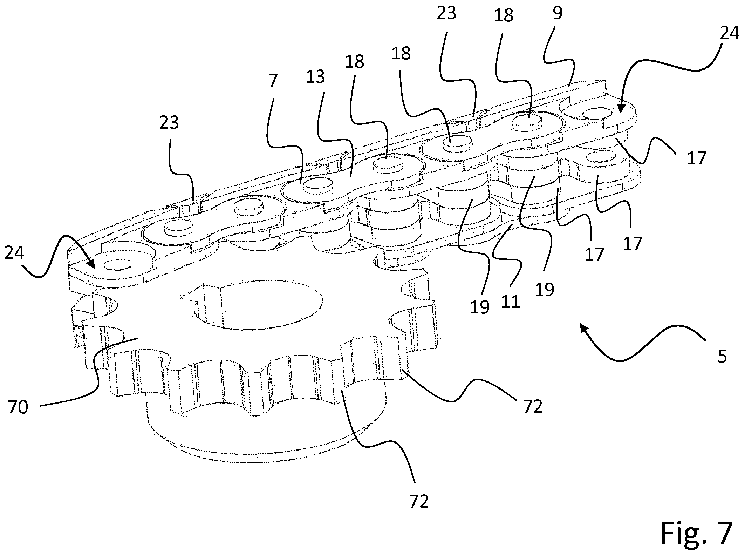

Figur 7 zeigt eine schematische Perspektivansicht einer weiteren Ausführungsform einer erfindungsgemäßen Förderkette 5. Für den Fachmann ist klar, dass in Figur 7 lediglich ein Abschnitt der Förderkette 5 zu erkennen ist. Auch die Ausführungsform einer Förderkette 5 aus Figur 7 umfasst eine Vielzahl einzelner Kettenglieder 7. Die Kettenglieder 7 besitzen weiterhin jeweils zwei parallel zueinander orientierte Schenkel 11 und 13. Die beiden Schenkel 11 und 13 des jeweiligen Kettengliedes 7 sind vorliegend durch zwei Bolzen 18 mechanisch aneinander gekoppelt. Die Bolzen 18 sind parallel zueinander orientiert.

Die Förderkette 5 umfasst Transportelemente 9, die auf gegenüberliegenden Seiten jeweils zwei Ausnehmungen 24 umfassen. In Ausnehmungen 24 eines ersten Transportelementes 9 und in Ausnehmungen 24 eines dem ersten Transportelement 9 direkt benachbarten zweiten Transportelementes 9 sind die beiden Schenkel 11 und 13 eines Kettengliedes 7 angeordnet. Unter Zuhilfenahme der Transportelemente 9 werden die Kettenglieder 7 daher gelenkig miteinander verbunden. Die Schenkel 11 und 13 können in ihrer jeweiligen Ausnehmung 24 um die Achse der Bolzen 18 relativ zum Transportelement 9 drehend bewegt werden.

Die Transportelemente 9 besitzen jeweils zwei Buchsen 17 zur Aufnahme von Bolzen 18. Beide Buchsen 17 der Transportelemente 9 sind konstruktiv gemäß der zweiten Buchse 17 der Förderkette 5 des Ausführungsbeispiels aus den Figuren 1 bis 6 ausgebildet. Aus diesem Grunde wird nachfolgend zur Kennzeichnung beider Buchsen im Ausführungsbeispiel einer Förderkette 5 aus den Figuren 7 bis 9 die Bezugsziffer 17 verwendet.

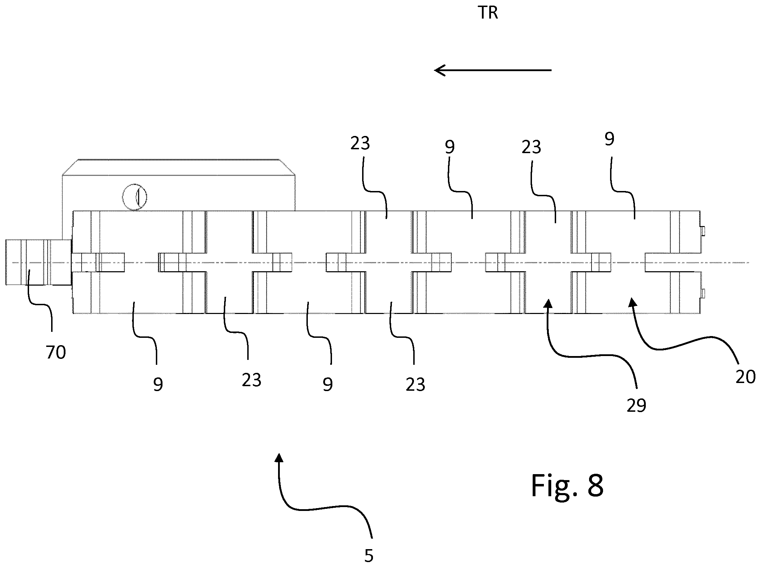

Wie in Figur 7 zu erkennen, besitzen beide Buchsen 17 eines jeden Transportelementes 9 eine in Richtung weg der jeweilige Aufstandsfläche 20 (vgl. Figur 8) konvex gewölbte Formgebung, um mit dem Ritzel 70 und einem Kettenblatt 50 kämmend in Eingriff gebracht zu werden. Beide Buchsen 17 eines Transportelementes 9 werden von Bolzen 18 benachbarter Kettenglieder 7 durchsetzt, so dass das Transportelement 9 fest mit den benachbarten Kettengliedern 7 in Verbindung steht. Beide Bolzen 18 eines jeweiligen Kettengliedes 7 stehen zudem mit einem Stützelement 23 in Verbindung. Jedes der Stützelemente 23 besitzt zwei Buchsen 19, in welchen die Bolzen 18 des jeweiligen Kettengliedes 7 aufgenommen sind. Zwei aufeinander folgenden Transportelementen 9 ist jeweils ein Stützelement 23 zwischengeordnet. Die Buchsen 19 der Stützelemente 23 befinden sich zwischen parallelen Armen der Buchsen 17 zweier Transportelemente 9. Die Stützelemente 23 sind aus Kunststoff gebildet.

Figur 8 zeigt eine schematische Draufsicht auf die Förderkette 5 der in Figur 7 gezeigten Ausführungsform. Die Stützelemente 23 besitzen jeweils eine plane Aufstandsfläche 29, welche an die planen Aufstandsflächen 20 der Transportelemente 9 anschließen und gemeinsam mit den planen Aufstandsflächen 20 der Transportelemente 9 eine zumindest näherungsweise unterbrechungsfreie horizontale Transportebene für Getränkebehältnisse 2 (vgl. Figur 2) ausbilden. Die Transportrichtung TR, entlang welcher die Förderkette 5 Getränkebehältnisse 2 bewegt, ist weiterhin mittels Pfeildarstellung angedeutet. Eine Zusammenschau der Figuren 7 und 8 lässt zudem erkennen, dass die Transportelemente 9 und die Stützelemente 23 jeweils geringfügig über die Schenkel 11 und 13 der Kettenglieder 7 seitlich überstehen.

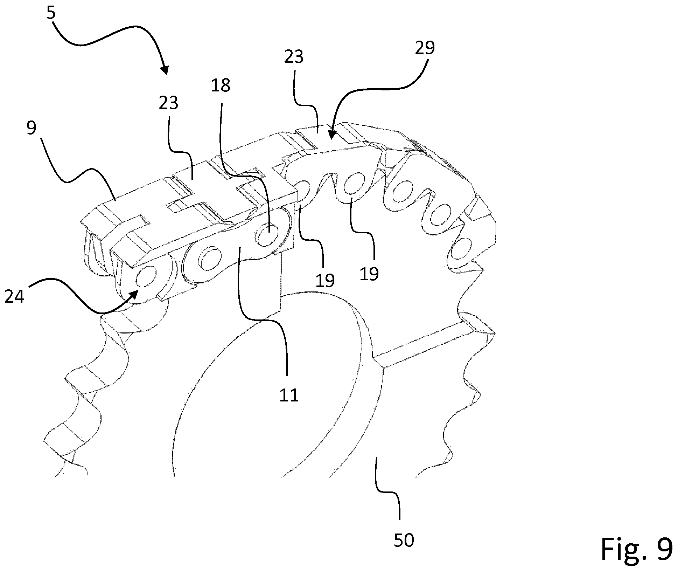

Figur 9 zeigt eine schematische Ansicht von schräg oben auf die Ausführungsform einer Förderkette 5 gemäß Figuren 7 und 8. Zu erkennen sind nochmals die beiden Buchsen 19 der Stützelemente 23. Die Buchsen besitzen eine in Richtung weg der Aufstandsfläche 29 des jeweiligen Stützelementes 23 konvex gewölbte Formgebung. Hierdurch kann ein kämmender Eingriff zwischen Kettenblatt 50 und Förderkette 5 hergestellt werden. Auch sind die Ausnehmungen 24 der Transportelemente 9 nochmals dargestellt, in welchen die Schenkel 11 und 13 der Kettenglieder 7 aufgenommen sind, um benachbarte Kettenglieder 7 gelenkig miteinander zu verbinden.

Figur 10 zeigt eine schematische Ansicht einer Ausführungsform eines erfindungsgemäßen Transportsystems 100. Das Transportsystem 100 ist vorgesehen zur Beförderung von Artikeln bzw. Getränkebehältnissen 2 (vgl. Figur 2). Das Transportsystem 100 besitzt ein angetriebenes Ritzel 70 mit Außenverzahnung 72, das kämmend mit der Förderkette 5 in Eingriff steht. Über das Ritzel 70 wird somit die Förderkette 5 angetrieben, so dass die ggf. auf der Förderkette 5 aufstehenden Getränkebehältnisse 2 in Transportrichtung TR fahren.

Auch besitzt das Transportsystem 100 ein Kettenblatt 50 mit Außenverzahnung 52, welches Kettenblatt 50 ebenso kämmend mit der Förderkette 5 in Eingriff steht. Über das Kettenblatt 50 wird die Förderkette 5 umgelenkt.

Die Förderkette 5 des Transportsystems 100 ist gemäß der Förderkette 5 aus dem Ausführungsbeispiel aus den vorhergehenden Figuren 7 bis 9 ausgebildet. Eine Positionierungseinrichtung 30 kann ebenso Bestandteil eines Transportsystems 100 sein. In diesem Fall verfügt die Förderkette 5 über einen durch Nuten von Transportelementen 9 und/oder Stützelementen 23 ausgebildeten Kanal, wie er beispielhaft in Figur 2 zu erkennen ist.

Auch ist vorstellbar, dass weitere Ausführungsformen eines erfindungsgemäßen Transportsystems 100 Förderketten 5 besitzen, die gemäß dem Ausführungsbeispiel aus den Figuren 1 bis 6 ausgebildet sind.

### Bezugszeichenliste

- 2: Getränkebehältnis
- 5: Förderkette
- 6: Nut
- 7: Kettenglied
- 9: Transportelement
- 11: Schenkel
- 13: Schenkel
- 14: Dach
- 15: Buchse
- 17: Buchse
- 18: Bolzen
- 19: Buchse
- 20: Aufstandsfläche (Transportelement)
- 22: Finger
- 23: Stützelement
- 24: Ausnehmung
- 28: Führungsarme
- 29: Plane Aufstandsfläche
- 30: Positionierungseinrichtung
- 50: Kettenblatt
- 52: Verzahnung
- 70: Ritzel
- 72: Verzahnung
- 100: Transportsystem

- TR: Transportrichtung

## Patentansprüche

1. Förderkette (5) zum Transport von Artikeln wie Getränkebehälter (2) oder dergleichen, aufweisend eine Vielzahl einzelner Kettenglieder (7), welche Kettenglieder (7) jeweils zwei parallel zueinander orientierte Schenkel (11, 13) und mindestens einen Bolzen (18) umfassen, der die beiden parallel zueinander orientierten Schenkel (11, 13) des jeweiligen Kettengliedes (7) mechanisch aneinander koppelt, wobei Bolzen (18) direkt benachbarter Kettenglieder (7) gelenkig miteinander in Verbindung stehen, so dass die einzelnen Kettenglieder (7) relativ zueinander verschwenkt werden können, und mit einer Vielzahl einzelner Transportelemente (9), die jeweils eine plane Aufstandsfläche (20) für Artikel bereitstellen und jeweils mindestens zwei Buchsen (15, 17) besitzen, in welchen Bolzen (18) direkt benachbarter Kettenglieder (7) drehbeweglich aufgenommen sind, wobei wenigstens eine der mindestens zwei Buchsen (15, 17) von Transportelementen (9) eine Außenmantelfläche (20) ausbildet, die jeweils eine in Richtung weg der Aufstandsfläche (20) gerichtete konvexe Krümmung besitzt, wobei die konvex gewölbten Außenmantelflächen (20) der Buchsen (15, 17) korrespondierend zu einer Verzahnung (52) eines Kettenblattes (50) ausgebildet sind, **dadurch gekennzeichnet, dass** ein Bolzen (18) wenigstens eines der Kettenglieder (7) durch eine Buchse (15, 17) eines ersten Transportelementes (9) und durch eine Buchse (15, 17) eines zweiten Transportelementes (9) drehbeweglich aufgenommen ist und dass die Buchse (17) des ersten Transportelementes (9) zwei parallele Arme umfasst und die Buchse (15) des weiteren Transportelementes (9) zwischen den beiden Armen positioniert ist, so dass der Bolzen (18) die Buchse (17) des ersten Transportelementes (9) und die Buchse (15) des weiteren Transportelementes (9) gemeinsam durchsetzt.

2. Förderkette nach Anspruch 1, bei welcher die zwei Schenkel (11, 13) eines oder mehrerer der Kettenglieder (7) jeweils einen Durchbruch ausbilden, in welchen Durchbrüchen der Bolzen (18) eines jeweils direkt benachbarten Kettengliedes (7) drehbeweglich aufgenommen ist, um die jeweiligen Kettenglieder (7) gelenkig miteinander zu verbinden.

3. Förderkette nach Anspruch 1, bei welcher sämtliche der mindestens zwei Buchsen (15, 17) eines oder mehrerer Transportelemente (9) eine Außenmantelfläche ausbilden, die jeweils eine in Richtung weg der Aufstandsfläche (20) gerichtete konvexe Krümmung besitzt, wobei die Radien der konvexen Krümmung für sämtliche der mindestens zwei Buchsen (15, 17) des jeweiligen Transportelementes (9) zumindest näherungsweise identisch ausgebildet sind.

4. Förderkette nach einem oder mehreren der Ansprüche 1 bis 3, bei welcher ein oder mehrerer Kettenglieder (7) jeweils wenigstens zwei Bolzen (18) umfassen, die parallel zueinander orientiert sind und die Schenkel (11, 13) des jeweiligen Kettengliedes (7) mechanisch aneinander koppeln, wobei mit den wenigstens zwei Bolzen (18) jeweils ein Stützelement (23) in Verbindung steht, das über korrespondierende Öffnungen die jeweiligen wenigstens zwei Bolzen (18) aufnimmt und eine plane Aufstandsfläche (29) für Artikel bereitstellt.

5. Förderkette nach einem oder mehreren der Ansprüche 1 bis 4, bei welcher Aufstandsflächen (20) der Transportelemente (9) und/oder Aufstandsflächen (29) der Stützelemente (23) derart aneinander angrenzen, dass diese gemeinsam eine zumindest näherungsweise unterbrechungsfreie Transportebene für Artikel bereitstellen.

6. Förderkette nach einem oder mehreren der Ansprüche 1 bis 5, bei welcher die zwei parallel zueinander orientierten Schenkel (11, 13) und/oder der Bolzen (18) der einzelnen Kettenglieder (7) jeweils durch Metall und insbesondere durch Stahl gebildet sind.

7. Förderkette nach einem oder mehreren der Ansprüche 1 bis 6, bei welcher die Transportelemente (9) und/oder die Stützelemente (23) jeweils durch Kunststoff gebildet sind.

8. Förderkette nach einem oder mehreren der Ansprüche 1 bis 7, bei welcher die einzelnen Transportelemente (9) und/oder die Stützelemente (23) im Bereich ihrer jeweiligen Aufstandsfläche (20, 29) eine Nut (6) besitzen, wobei die Nuten (6) sämtlicher Transportelemente (9) und/oder die Nuten sämtlicher Stützelemente (23) gemeinsam einen im Wesentlichen unterbrechungsfreien Kanal ausbilden.

9. Transportsystem (100) für Artikel, aufweisend eine Förderkette nach einem oder mehreren der Ansprüche 1 bis 8, das Transportsystem umfassend:
- Ein angetriebenes Ritzel (70) mit Außenverzahnung (72), welches kämmend mit der Förderkette (5) in Eingriff steht, um die Förderkette (5) zu bewegen;
- Ein Kettenblatt (50) mit Außenverzahnung (52), welches kämmend mit der Förderkette (5) in Eingriff steht und die Förderkette (5) umlaufend lenkt.

10. Transportsystem nach Anspruch 9, aufweisend wenigstens eine Positionierungseinrichtung (30) mit einem oder mehreren Fingern (22), welche ein oder mehreren Finger (22) in den im Wesentlichen unterbrechungsfreien Kanal eintauchen um die Förderkette (5) zu führen.

11. Transportsystem nach Anspruch 10, bei welcher die wenigstens eine Positionierungseinrichtung (30) derart im Bereich des angetriebenen Ritzels (50) und/oder im Bereich des Kettenblattes (70) angeordnet ist, dass die ein oder mehreren Finger (22) im Bereich einer Umlenkung der Förderkette (5) mit dem im Wesentlichen unterbrechungsfreien Kanal in Eingriff stehen.

12. Transportsystem nach Anspruch 10 oder Anspruch 11, bei welchem die wenigstens eine Positionierungseinrichtung (30) mindestens zwei Führungsarme (28) besitzt, deren Längsachsen parallel zur Laufrichtung der Förderkette (5) ausgerichtet sind, welche Führungsarme (28) die Förderkette (5) bei ihrer Bewegung mit geringem Spiel passiert.

## Claims

1. A conveyor chain (5) for the transport of articles, such as beverage containers (2) or the like, the conveyor chain (5) comprising a multitude of individual chain links (7), which each comprise two plate portions (11, 13) oriented parallel to one another, and at least one pin (18), which mechanically couples the two mutually parallel oriented plate portions (11, 13) of the particular chain link (7) to each other, wherein pins (18) of directly adjacent chain links (7) are articulately linked to each other such that the individual chain links (7) can be swivelled relative to each other, and with a multitude of individual transport elements (9), which each provide a planar standing surface (20) for articles, and which each have at least two bushings (15, 17) in which pins (18) of directly adjacent chain links (7) are accommodated in a rotationally movable manner, wherein at least one of the at least two bushings (15, 17) of the transport elements (9) forms an outer cover surface, which in each instance has a convex curvature directed in the direction away from the standing surface (20), wherein the convexly curved outer cover surfaces of the bushings (15, 17) are formed to correspond to a tooth system (52) of a chainwheel (50), **characterised in that** a pin (18) of at least one of the chain links (7) is accommodated in a rotationally movable manner by a bushing (15, 17) of a first transport element (9) and by a bushing (15, 17) of a second transport element (9), and **in that** the bushing (17) of the first transport element (9) comprises two parallel arms, and the bushing (15) of the other transport element (9) is positioned between the two arms such that the pin (18) passes both through the bushing (17) of the first transport element (9) and through the bushing (15) of the other transport element (9) together.

2. The conveyor chain according to claim 1, in which the two plate portions (11, 13) of one or more of the chain links (7) in each instance form an aperture, in which apertures the pin (18) of an in each instance directly adjacent chain link (7) is accommodated in a rotationally movable manner in order to articulately link the particular chain links (7) to each other.

3. The conveyor chain according to claim 1, in which all of the at least two bushings (15, 17) of one or more transport elements (9) form an outer cover surface, which in each instance has a convex curvature directed in the direction away from the standing surface (20), wherein the radii of the convex curvatures are formed to be at least approximately identical for all of the at least two bushings (15, 17) of the particular transport element (9).

4. The conveyor chain according to one or more of the claims 1 to 3, in which one or more chain links (7) each comprise at least two pins (18), which mechanically couple the two mutually parallel oriented plate portions (11, 13) of the particular chain link (7) to each other, wherein a support element (23) is in each instance in contact with the at least two pins (18), which support element (23) accommodates the particular at least two pins (18) by way of corresponding openings and provides a planar standing surface (29) for articles.

5. The conveyor chain according to one or more of the claims 1 to 4, in which standing surfaces (20) of the transport elements (9) and/or standing surfaces (29) of the support elements (23) are mutually adjacent in such a manner that they together provide an at least approximately interruption-free transport surface for articles.

6. The conveyor chain according to one or more of the claims 1 to 5, in which the two mutually parallel oriented plate portions (11, 13) and/or the pin (18) of the individual chain links (7) are each formed from metal and, in particular, from steel.

7. The conveyor chain according to one or more of the claims 1 to 6, in which the transport elements (9) and/or the support elements (23) are each formed from plastic material.

8. The conveyor chain according to one or more of the claims 1 to 7, in which the individual transport elements (9) and/or the support elements (23) have a slot (6) in the area of their particular standing surface (20, 29), wherein the slots (6) of all transport elements (9) and/or the slots of all support elements (23) together form a substantially interruption-free channel.

9. A transport system (100) for articles, having a conveyor chain according to one or more of the claims 1 to 8, the transport system comprising:
- a driven sprocket (70) with external toothing (72), which is in intermeshing engagement with the conveyor chain (5) in order to move the conveyor chain (5);
- a chainwheel (50) with external toothing (52), which is in intermeshing engagement with the conveyor chain (5) and guides the conveyor chain (5) in a circulating manner.

10. The transport system according to claim 9, having at least one positioning device (30) with one or more fingers (22), which one or more fingers (22) dip into the substantially interruption-free channel in order to guide the conveyor chain (5).

11. The transport system according to claim 10, in which the at least one positioning device (30) is arranged in the area of the driven sprocket (50) and/or in the area of the chainwheel (70) in such a manner that the one or more fingers (22) are in engagement with the substantially interruption-free channel in the area of a deflection of the conveyor chain (5).

12. The transport system according to claim 10 or claim 11, in which the at least one positioning device (30) has at least two guide arms (28), the longitudinal axes of which are aligned parallel to the running direction of the conveyor chain (5), with the conveyor chain (5) in its movement passing the guide arms (28) with a slight clearance.

## Revendications

1. Chaîne transporteuse (5) destinée à transporter des articles tels que des récipients à boissons (2) ou similaires, comprenant une pluralité de maillons de chaîne (7) individuels, lesquels maillons de chaîne (7) comprennent chacun deux branches (11, 13) orientées parallèlement l'une à l'autre et au moins un boulon (18) qui couple mécaniquement l'une à l'autre les deux branches (11, 13) orientées parallèlement du maillon de chaîne (7) respectif, dans laquelle des boulons (18) de maillons de chaîne (7) directement adjacents sont en liaison entre eux de façon articulée de sorte que les maillons de chaîne (7) individuels peuvent pivoter les uns par rapport aux autres, et avec une pluralité d'éléments de transport (9) individuels qui fournissent chacun une surface d'appui (20) plane pour des articles et comprennent chacun au moins deux douilles (15, 17) dans lesquelles des boulons (18) de maillons de chaîne (7) directement adjacents sont logés de manière mobile en rotation, dans laquelle au moins l'une desdites au moins deux douilles (15, 17) d'éléments de transport (9) forme une surface latérale extérieure (20) qui présente respectivement une courbure convexe dirigée dans la direction opposée à la surface d'appui (20), dans laquelle les surfaces latérales extérieures (20) courbées de manière convexe des douilles (15, 17) sont réalisées de manière correspondante à une denture (52) d'un plateau (50), **caractérisée par le fait qu'**un boulon (18) d'au moins l'un des maillons de chaîne (7) est reçu de manière mobile en rotation par une douille (15, 17) d'un premier élément de transport (9) et par une douille (15, 17) d'un deuxième élément de transport (9), et que la douille (17) du premier élément de transport (9) comprend deux bras parallèles et que la douille (15) de l'autre élément de transport (9) est positionnée entre les deux bras de sorte que le boulon (18) traverse aussi bien la douille (17) du premier élément de transport (9) que la douille (15) de l'autre élément de transport (9).

2. Chaîne transporteuse selon la revendication 1, dans laquelle les deux branches (11, 13) d'un ou de plusieurs des maillons de chaîne (7) forment chacune une percée, le boulon (18) d'un maillon de chaîne (7) respectivement directement adjacent est logé de manière mobile en rotation dans lesdites percées afin de relier les maillons de chaîne (7) respectifs les uns aux autres de manière articulée.

3. Chaîne transporteuse selon la revendication 1, dans laquelle l'ensemble desdites au moins deux douilles (15, 17) d'un ou de plusieurs éléments de transport (9) forment une surface latérale extérieure qui présente respectivement une courbure convexe dirigée dans la direction opposée à la surface d'appui (20), dans laquelle les rayons de la courbure convexe pour l'ensemble desdites au moins deux douilles (15, 17) de l'élément de transport (9) respectif sont conçus de manière identique au moins approximativement.

4. Chaîne transporteuse selon une ou plusieurs des revendications 1 à 3, dans laquelle un ou plusieurs maillon(s) de chaîne (7) comprend/comprennent chacun au moins deux boulons (18) qui sont orientés parallèlement l'un à l'autre et couple mécaniquement l'une à l'autre les branches (11, 13) du maillon de chaîne (7) respectif, dans laquelle respectivement un élément de support (23) est en liaison avec lesdits au moins deux boulons (18), qui reçoit lesdits au moins deux boulons (18) respectifs par des ouvertures correspondantes et fournit une surface d'appui (29) plane pour des articles.

5. Chaîne transporteuse selon une ou plusieurs des revendications 1 à 4, dans laquelle des surfaces d'appui (20) des éléments de transport (9) et/ou des surfaces d'appui (29) des éléments de support (23) sont contiguës les unes aux autres de telle manière qu'elles fournissent ensemble un plan de transport au moins approximativement ininterrompu pour des articles.

6. Chaîne transporteuse selon une ou plusieurs des revendications 1 à 5, dans laquelle les deux branches (11, 13) orientées parallèlement l'une a l'autre et/ou le boulon (18) des maillons de chaîne (7) individuels sont constitués chacun de métal et en particulier d'acier.

7. Chaîne transporteuse selon une ou plusieurs des revendications 1 à 6, dans laquelle les éléments de transport (9) et/ou les éléments de support (23) sont constitués chacun de matière plastique.

8. Chaîne transporteuse selon une ou plusieurs des revendications 1 à 7, dans laquelle les éléments de transport (9) individuels et/ou les éléments de support (23) présentent une rainure (6) au niveau de leur surface d'appui (20, 29) respective, dans laquelle les rainures (6) de l'ensemble des éléments de transport (9) et/ou les rainures de l'ensemble des éléments de support (23) forment ensemble un canal pour l'essentiel ininterrompu.

9. Système de transport (100) pour des articles, comprenant une chaîne transporteuse selon une ou plusieurs des revendications 1 à 8, le système de transport comprenant:
- un pignon mené (70) à denture extérieure (72) qui engrène avec la chaîne transporteuse (5) afin de déplacer la chaîne transporteuse (5);
- un plateau (50) à denture extérieure (52) qui engrène avec la chaîne transporteuse (5) et guide en circulation la chaîne transporteuse (5).

10. Système de transport selon la revendication 9, comprenant au moins un dispositif de positionnement (30) ayant un ou plusieurs doigts (22), le(s)quel(s) un ou plusieurs doigts (22) plongent dans le canal pour l'essentiel ininterrompu afin de guider la chaîne transporteuse (5).

11. Système de transport selon la revendication 10, dans lequel ledit au moins un dispositif de positionnement (30) est disposé au niveau du pignon mené (50) et/ou au niveau du plateau (70) de telle sorte que le(s)dit(s) un ou plusieurs doigts (22) sont en prise avec le canal pour l'essentiel ininterrompu au niveau d'une déviation de la chaîne transporteuse (5).

12. Système de transport selon la revendication 10 ou la revendication 11, dans lequel ledit au moins un dispositif de positionnement (30) comprend au moins deux bras de guidage (28) dont les axes longitudinaux sont orientés parallèlement à la direction de défilement de la chaîne transporteuse (5), la chaîne transporteuse (5), lorsqu'elle se déplace, passant avec un faible jeu par lesdits bras de guidage (28).
